Europäisches Patentamt

European Patent Office

Office européen des brevets

(11) Publication number: **0 436 254 A1**

# EUROPEAN PATENT APPLICATION

(21) Application number: 90203480.0

(22) Date of filing: 20.12.90

(51) Int. Cl.⁵: **C02F 3/28**, C02F 1/62

(30) Priority: 05.01.90 GB 9000236

(43) Date of publication of application:
10.07.91 Bulletin 91/28

(84) Designated Contracting States:
AT BE CH DE DK ES FR GB GR IT LI LU NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Barnes, Lionel John
164 Sandyhurst Lane
Ashford, Kent TN25 4NX(GB)

(74) Representative: Bennett, David Arthur Horder
et al
4, York Road
London SE1 7NA(GB)

(54) Treatment of aqueous waste streams.

(57) A process for treating sulphate-containing aqueous waste streams, which comprises anaerobic microbial reduction of the sulphate using sulphate reducing bacteria, while adding to the reaction mixture an alcohol as carbon/energy source. with concomitant microbial methanogenesis, e.g. in a sludge blanket reactor, a cheap carbon source such as ethanol can be used to control treatment, to recover valuable heavy metals and sulphur, and produce an environmentally-acceptable effluent.

## TREATMENT OF AQUEOUS WASTE STREAMS

The invention relates to the treatment of aqueous waste streams, in particular to the treatment of aqueous waste streams containing sulphates and optionally heavy metals, for instance zinc, cadmium, cobalt or copper, and to the recovery of such metals, if present, and sulphur.

Large quantities of sulphate wastes are produced by, amongst others, the metal industry, especially during the winning of metals from sulphide ores. Currently, sulphate is removed from process streams by precipitation as gypsum which, since calcium sulphate is reasonably soluble in water, does not avoid water pollution on discharge. This precipitation process creates a particular environmental problem if the streams are contaminated with heavy metals. Since heavy metals co-precipitate, the gypsum must be stockpiled. These solid process wastes can be continuously leached by rain-water, and thus contaminate the underlying aquifer. Environmental pressures are building up, and sulphate-containing effluents must be cleaned up more satisfactorily.

Removal of sulphate by chemical processes does not appear to be economically practical.

The biological removal of sulphate from industrial effluent (high acid mine water) in an upflow packed bed reactor, is described by Maree et al, Wat. 21(2), 151-146 (1987). Sulphate-reducing bacteria (SRB) are responsible for the reduction of sulphate to sulphide, while photosynthetic sulphur bacteria oxidise sulphide to elemental sulphur. Calcium carbonate and heavy metal sulphides are precipitated. Molasses is used as the carbon source for the bacteria. Metal immobilisation was good, but the reactor effluent COD was high.

A similar process is described by Maree et al, Journal WPCF 59(12), 1069-1074 (Dec. 1987). Fermentation of organic molecules such as sucrose, to give lactate, is a prerequisite to subsequent sulphate reduction, because SRB can only use specific fermentation products such as lactate and pyruvate. SRB use lactate to produce unwanted acetate.

Jenkins et al, Journal WPCF 53(1, 25-32 (Jan. 1981), describe the removal and recovery of metals from municipal sludge, by acidification. Although the sludge provides a carbon source for SRB, there is excess carbon which must be subsequently removed.

It has now been found that sulphate, and optionally heavy metals may be removed from aqueous waste streams by a process comprising anaerobic microbial reduction of the sulphate using sulphate reducing bacteria (and concomitant conversion of the heavy metals to insoluble metal sulphides) while adding to the reaction mixture an alcohol as carbon/energy source. In order to avoid the build-up of acetate as a product of microbial sulphate reduction, the process is preferably conducted in combination with anaerobic microbial methanogenesis. Flocculants are used in order to improve productivity and to reduce solid carry-over in the reactor's aqueous effluent stream. Thus, an aqueous effluent stream is obtained which contains only very low amounts of sulphate, metals and carbon compounds.

The present invention has the basic principle of microbial reduction of sulphate, at low redox potential, and precipitation of metals, if present, as sulphides. Suitable organisms occur in the anoxic environments found in oceans, lakes and sediments, and use organic compounds both for growth and as the energy source for the reduction of sulphate, as follows:

$$SO_4{}^{2-} + \text{'CHO'} \rightarrow S^{2-} + CO_2 + H_2O + \text{cells}$$

The sulphate-reducing bacteria from anaerobic environments normally exist as part of a consortium of organisms, because of the complex nature of the available organic substrates. Symbiosis occurs, in which one organism partially degrades its substrate to products which can be assimilated by other organisms. Anaerobic methanogens are often also present. Table 1 gives some examples of sulphate-reducing organisms, along with their most suitable substrates, major organic products and optimum operating temperatures.

An important factor is that these naturally-occurring anaerobes operate at pH values around neutrality. In nature, this is often achieved by chemical equilibria which involve precipitation/ dissolution of carbonates and sulphide. It should also be noted that these organisms are found at great depths and will therefore withstand high hydrostatic pressures; this is advantageous when considering the design of a suitable bioreactor system.

Table 1 indicates that a variety of carbon substrates may be used. In avoiding the use of undefined carbon sources, it was found initially that sulphate-reducing organisms could be isolated which grew very well on lactic acid. Although methanol is a cheap, pure commercial carbon source, methanol utilising-sulphate-reducing organisms are difficult to isolate owing to the presence of methanogens that rapidly convert methanol to methane. Lactic acid has been used in a model system, to show the feasibility of the process of the invention, but the cost of this substrate makes it impractical for use on a commercial scale. However, the present invention is based on the discovery that sulphate-reducing organisms, which grow well on lactic acid, can utilise much cheaper substrates, and in particular ethanol and that these microorganisms can be used to clean up wastes containing sulphate and heavy metals and sulphur can be recovered.

The novel process is conducted under conditions which allow anaerobic microbial reduction of sulphate and, if necessary or desired, microbial methanogenesis to reduce the BOD in the reactor effluent. The amount of alcohol in the effluent is usually less than 40 ppm wt, preferably less than 10 ppm, more preferably less than 2 ppm.

In order that the sulphate-reducing bacteria should act satisfactorily, the process is preferably conducted at a redox potential below -100 mV with respect to a standard calomel electrode; the redox potential is preferably maintained below -250 mV, more preferably below -300 mV in order that the methanogens should work effectively. In case that the redox potential is too high, addition of sulphate usually will result in a decrease of the redox potential.

As indicated above, the process can be operated at about neutrality; the preferred pH range is 6 to 8.5. The temperature can also be in a range which is suitable for simple operation, e.g. 10 to 70°C, preferably 15-45°C.

The sulphate removal which may be obtained using the process of the present invention is usually more than 60%. Preferably at least 75% of the sulphate is removed, more preferably more than 90%. The amount of sulphate in the feed is suitably up till 10 g/h, preferably between 0.3 and 7.5 g/l, more preferably between 0.5 and 5 g/l. The feed may contain an amount of zinc suitably up till 10 g/l, preferably up till 7.5 g/l, more preferably between 20 mg and 5 g/l, still more preferably between 50 mg and 4 g/l.

The process can simple be operated by passing the waste liquid, preferably upward, through an airtight, packed reactor (e.g. sludge blanket) in whose lower region the anaerobic microbial action takes place. A reactor of this type can be operated very simple. Depending on its size, some agitation may be provided in the reactor, in order to distribute the incoming waste stream through the organism-containing sludge. The reactor headspace should preferably be maintained anaerobically, e.g. under a blanket of inert gas.

For economic utilisation of a sludge reactor, it is preferred that a flocculant should be present. The fine particles, e.g. of sulphide and organisms that are produced in the reactor by the process on upward flow are thus prevented from leaving the reactor in the aqueous overflow, thus limiting the flow velocity unnecessarily. An example of a suitable, commercial flocculant is the anionic Kemfloc 245.

The product streams of the bioreactor are gaseous, aqueous and sludge. Any or all of hydrogen sulphide, carbon dioxide and methane can be recovered, as necessary or desired, from the gaseous effluent. The aqueous effluent which can be very simply removed by decantation, contains reduced levels of heavy metals such as zinc, cadmium, cobalt and copper, and can be discharged to the environment after removal of soluble sulphide via a stripper or any other suitable process. The sludge can be removed by a suitable bleed; it contains biomass and metal sulphides. The gaseous and sludge wastes can be added, if appropriate, to a roaster of, say, a metal refinery. The process of the invention provides a technically and economically-favourable means of treating contaminated effluents, aquifers and site surface waters.

In addition to the carbon source, the organisms should of course be provided with sources of nitrogen and phosphorus. These may be conventional, e.g. as ammonia or urea and phosphate. Control of the level of phosphate will determine whether metals such as magnesium and calcium remain in the aqueous effluent.

The alcohol is suitably chosen from mono, di- or tri-alcohols containing up to six carbon atoms, preferably from mono- or di- alcohols containing up to four carbon atoms in a straight chain. Methanol and, especially, ethanol are the most preferred alcohols.

An important advantage of the invention is that pH control may not be necessary in the bioreactor, thus simplifying the process and reducing costs. These primary aims are most notably met by the fact that ethanol can be used as carbon substrate. It has been demonstrated, at a residence time of less than 10 hours, the biological oxygen demand of the process aqueous effluent can be reduced to environmentally acceptable levels. The residence time is preferably between 1 and 24 h, more preferably between 1.5 and 10 hours. One mol (46g) of ethanol consumed will reduce about 1 mol (96 g) of sulphate, therefore the quantity of sulphate required to be reduced can be controlled by the ethanol added. This is in contrast to the use of undefined nutrient sources of the type that has previously been described.

The following Examples illustrate the invention.

MATERIAL AND METHODS

## CHEMICALS

A synthetic aquifer solution, fortified with a carbon/energy source, phosphate and ammonia, was used in the laboratory experiments as feed medium. General purpose grade chemicals were used to prepare this synthetic solution. The approximate composition is given in the table below:

| SYNTHETIC MEDIUM COMPONENT | $mg.l^{-1}$ |
|---|---|
| Calcium Sulphate | 1300 |
| Zinc Sulphate heptahydrate | 490 |
| Cadmium Sulphate trihydrate | 8.1 |
| Cobaltous Sulphate heptahydrate | 11 |
| Cuprous Sulphate pentahydrate | 13 |
| Ferrous Sulphate heptahydrate | 65 |
| Magnesium Sulphate heptahydrate | 280 |
| Manganous Sulphate tetrahydrate | 26 |
| Potassium Sulphate | 450 |
| Nickel Sulphate tetrahydrate | 6.2 |
| Chromic Sulphate pentadecahydrate | 14 |
| Sodium Molybdate dihydrate | 11 |
| Sodium selenite | 3.0 |
| DiSodium Arsenate heptahydrate | 7.4 |
| Sodium fluoride | 50 |
| Hydrochloric acid | 590 |
| Resazurin (Redox indicator) | 2 |

## ORGANISMS

The mixed cultures, containing sulphate reducing organisms, which were used in our experiments were isolated from environmental samples. Methanogenic acetate utilising organisms were obtained from an anaerobic digester. The isolates used as inocula were
(1) 18 samples from an oil refinery, taken from tank farm soil, sludge tanks, sewage works and treatment plant. These samples were combined to give 5 batch cultures.
(2) 15 local samples from sewage works, river estuary, stagnant pools and water channels.
(3) 10 samples from a non-ferrous metal refining site.

## ANALYTICAL PROCEDURES

Thirty millilitre aqueous samples were centrifuged for 5 minutes at 3500 rpm. The pH of the supernatant was measured before filtering through a 0.2 $\mu$m millipore filter. Two drops of 10%w sodium azide solution were added to prevent microbial growth on residual organics.

Sludges were initially degraded in a microwave digestor using Aqua Regia to dissolve the metals prior to elemental analysis.

Elemental composition of aqueous solutions and sludge digests were determined by plasma emission analysis (ICP).

Sulphide levels in solutions and sludges were obtained by reacting a ferric solution at pH 2 with the sample and then determining the ferrous ion produced by colorimetric assay after complexation with 1,10

4

phenanthroline. Computation of the soluble sulphide concentration was carried out using the stoichiometric ratio shown in the following reaction:

$$2Fe^{3+} + S^{2-} \longrightarrow 2Fe^{2+} + S^{o}$$

Acetic and lactic acids were determined by ion chromatography using an Aminex HPX87 organic acid column with 6 mmol sulphuric acid as eluent at 40°C. The concentrations of these acids were determined from their absorption at 210 nm.

Ethanol and methanol were analysed on a gas chromatograph using a Poropak Q stationary phase, operated at 180°C with nitrogen carrier gas and a flame ionisation detector. An integrator was used to determine the ethanol and methanol concentrations.

Methane in the reactor offgas stream was determined by gas chromatography using a Poropak Q stationary phase. A column temperature of 30°C was used with nitrogen as carrier gas. An integrator coupled to a flame ionisation detector gave the concentration of methane in the offgas sample.

Hydrogen sulphide and carbon dioxide in the reactor offgas in the laboratory experiments were determined by passing a known volume of the gas through an acidified silver nitrate solution to adsorb hydrogen sulphide, and then through a solution of barium hydroxide to adsorb the carbon dioxide. The concentrations of silver and barium were determined by ICP before and after reaction with the offgas. Computation of the quantities of hydrogen sulphide and carbon dioxide were then carried out using the stoichiometric ratios given in the respective reactions below:

$$2AgNO_3 + H_2S \longrightarrow 2HNO_3 + AgS$$

$$Ba(OH)_2 + CO_2 \longrightarrow BaCO_3 + H_2O$$

Continuous analysers were used to determine the composition of the offgas produced in the pilot reactors.

## EXPERIMENTAL AND RESULTS

### ORGANISMS GROWTH

All experimental operations have been carried out under non-sterile conditions, using either batch culture growth in bottles, to establish the activities of the environmental cultures, or continuous culture using bench scale of pilot scale reactors, to demonstrate the feasibility of the process and determine the operating window.

### BATCH CULTURES

Five millilitres of the environmental samples were used as inocula for batch growth, at ambient temperatures, on synthetic medium (100 ml) in sealed 150 ml bottles which were made anaerobic with nitrogen and 10 mg of sodium sulphide. Standard synthetic medium supplemented with carbon substrates such as, lactate, methanol, acetate, ethanol and mixtures of these were tested. Microbial growth was followed by disappearance of these carbon substrates and SRB activity by sulphate degradation.

### CONTINUOUS CULTURES

Initially reactor experiments were carried out using lactate as the energy/growth substrate. Although it was possible to produce an effluent free of heavy metals and sulphate using this carbon substrate, two major problems existed; (1) the high carbon substrate cost, and (2) the formation of a water soluble carbonaceous product (acetate) which would give rise to an environmentally unacceptable biological oxygen demand. Slow adaption of the cultures using mixed carbon substrates allowed total conversion of ethanol to carbon dioxide, biomass and methane. The carbon components used in the feed, the acetate produced and sulphate reduced during the adaption procedure are given in Table 2. Similar results can be achieved by direct usage of suitable sludge.

The reactor experiments, using the synthetic medium, established that at the concentrations applied potentially toxic feed components such as arsenic, fluoride, selenium, molybdenum and heavy metals did not inhibit sulphate reduction.

Table 3 shows the data obtained for temperatures of 35, 40, 45 and 50°C, with residence times of about 10 hours. At 45°C, there is a significant increase in effluent ethanol and acetate, as well as a decrease in sulphate reduced, indicating that 40°C is near to the maximum operating temperature.

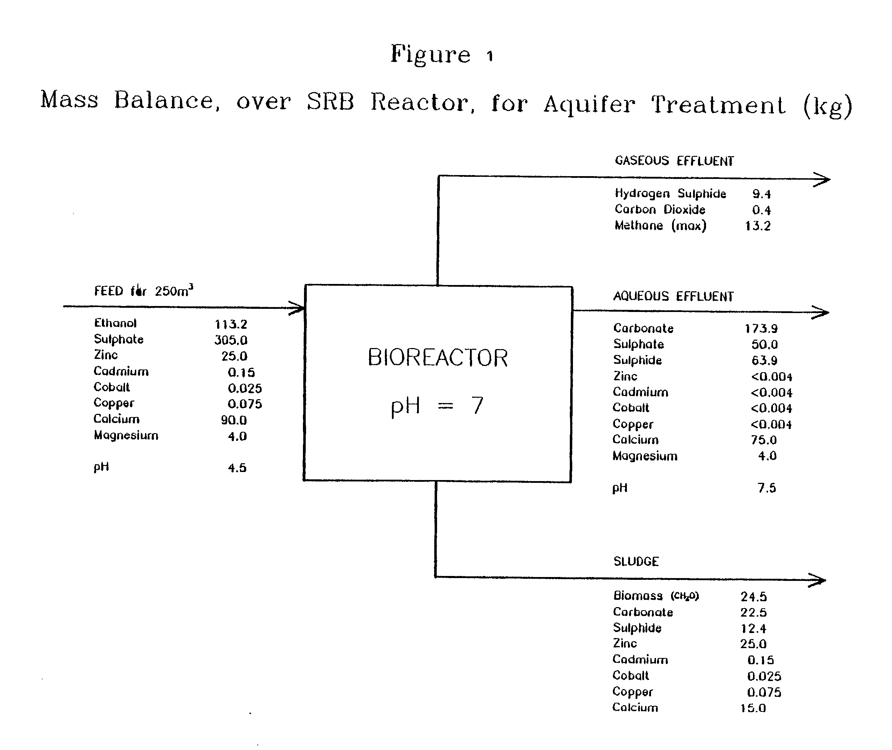

Figure 1 represents a typical example of a mass balance for the proposed process. An economic evaluation shows that this novel process is cost effective.

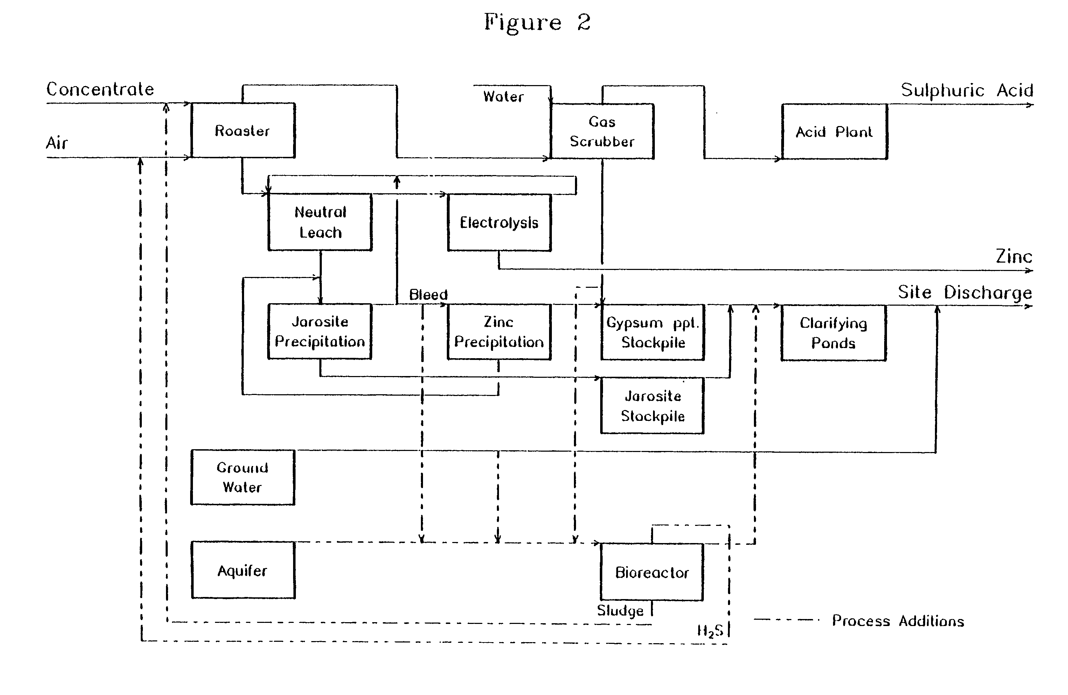

Figure 2 of the accompanying drawings is a diagramatic representation of a zinc refinery including a bioreactor operating the process of the present invention. The dotted lines indicate possible SRB process lines. The bioreactor can be used to treat ground water than may be contaminated, the underlying aquifer as well as process bleeds containing heavy metals and/or oxidised sulphur compounds. Thus replacing gypsum precipitation processes and alleviating the need for stockpiling metal contaminated gypsum.

EXAMPLE 1

This example shows the effects of treating an acidic feed solution, containing a synthetic mixture of metal sulphates, in a 1.6 litre anaerobic stirred tank bench reactor.

The consortium of organisms used for inoculation were isolated from environmental samples using lactic acid as a carbon/energy source. These organisms were adapted to grow on ethanol in a continuous stirred tank reactor. The pH of the cultures was controlled by hydroxide additions. The synthetic feed was made acidic to keep the heavy metals in solution. Temperature was controlled and the reactor headspace was purged with nitrogen to keep oxygen out of the system. Redox of the culture was monitored with the indicator Resazurin which turned colourless at -300mV
(using standard calomel reference).

Analysis of the feed medium and reactor effluent gave the compositions shown in Table 4, Example 1.

This data demonstrates that the sulphate level is lowered and the heavy metal concentrations in the effluent are at levels considered acceptable for safe environmental discharge. In addition, ethanol can be completely utilised without producing acetic acid.

EXAMPLE 2

This example shows the effects treating an acidic feed solution, containing a synthetic mixture of metal sulphates, in a 2.0 litre anaerobic column sludge reactor. Temperature of the culture was controlled and the reactor headspace was purged with nitrogen. Redox was monitored as in Example 1.

Organisms, previously adapted to growth on ethanol were used a inoculum. The reactor was operated without pH control. After the sludge bed had built up to one fifth of the column reactor volume, the pH of the feed was slowly reduced from 7 to 3.2 at a rate that enabled the culture to be self buffering at pH7.

Analysis of the feed medium and reactor solution, sampled just above the sludge bed, gave the compositions shown in Table 4, Example 2.

This data demonstrates that an acid medium (pH 3.20 can be used as a continuous feed to a sludge blanket reactor if sufficient buffering is available within the sludge to neutralise the feed acidity. The sulphate level is substantially lowered and the effluent heavy metal concentration would be environmentally acceptable.

EXAMPLE 3

This example demonstrates the feasibility of scale-up using a 9m$^3$ raked pilot reactor.

The sulphate reducing organisms used in the inoculum were obtained from environmental samples taken at a metal refinery and the methanogens were obtained from an anaerobic digester. The pH of the culture was controlled by adding sodium hydroxide to the reactor feed, and the reactor was temperature controlled by preheating this feed. The aqueous feed originated from the aquifer of a metal refining site and was supplemented with ethanol, ammonia and phosphate which were required for organism growth and hence sulphate reduction. Redox was measured with a probe and the headspace was purged with nitrogen to prevent oxygen ingression. A flucculant was used to maintain a low solids carryover in the aqueous reactor effluent and to produce a high density sludge blanket, with more than 10 %ww solids.

Analysis of the feed medium and reactor effluent gave the compositions shown in Table 4, Example 3.

This data demonstrates that a scaling factor of 5000 reactor capacity gave the same results as the bench reactors. Also the addition of a flucculant retained the solids in the reactor thus allowing a shorter liquid residence time.

EXAMPLE 4

This example demonstrates the effect of increased metal loading in the 9m³ raked pilot reactor. The culture pH was controlled and temperature was maintained near ambient. No headspace purge was applied because the high production of gases within the reactor prevented air ingression.

Analysis of the feed medium and reactor effluent gave the compositions shown in Table 4, Example 4.

The data shows that heavy metal wastes can be treated to produce an environmentally acceptable aqueous effluent, provided sufficient ethanol is added to maintain a low redox within the culture.

EXAMPLE 5

In this example a 12m³ pilot reactor, in which the feed liquid suspended the sludge blanket, was tested to demonstrate that the process can also be operated with a conventional anaerobic biotreater. The reactor pH and temperature were controlled and no headspace purge was applied. Urea was used as the nitrogen source for microbial growth.

Analysis of reactor data, Table 4 Example 5, shows this type of reactor can achieve the same results, with respect to effluent quality, as the other 4 examples given. Online offgas analysis, under the specific experimental operating conditions, showed that this stream was composed of 85% methane, 8% hydrogen sulphide and 6% carbon dioxide by volume. The methane production rate represents 0.4 mol per mol of ethanol consumed.

## Table 1
## Some Sulphate Reducing Organisms

| ORGANISMS | CARBON SUBSTRATE | CARBON PRODUCTS | MAX. GROWTH TEMPERATURE |
|---|---|---|---|
| *Desulfovibrio vulgaris* | La,Py | Ac | 44 C |
| *Desulfomonas pigra* | Py,yeast | Ac + $H_2$ | 45 C |
| *Desulfobulbus propionicus* | La,Pr,Et | Ac | 43 C |
| *Desulfococcus multivorans* | La,Py,Ac,Et,Me | $CO_2$ | 40 C |
| *Desulfobacter postgatei* | Ac,Et | $CO_2$ | 40 C |
| *Desulfosarcina variabilis* | La,Ac,Et,Me,Be | $CO_2$ | 38 C |
| *Desulfonema magnum* | Aromatic acids | $CO_2$ | 35 C |
| *Desulfotomaculum acetoxidans* | Ac | $CO_2$ | 42 C |
| " *orientis* | $H_2$ + $CO_2$ | — | 38 C |

La — Lactate, Py — Pyruvate, Ac — Acetate, Pr — Propionate, Be — Benzoate
Me — Methanol, Et — Ethanol

EP 0 436 254 A1

# Table 2

## Mixed Culture Adaption

### Effect of Changing Carbon Substrate

| Carbon Substrate, m.mol | | | Acetate | Sulphate |
|---|---|---|---|---|
| Lactate | Methanol | Ethanol | Produced, m.mol | Reduced, m.mol |
| 12.6 | 0 | 0 | 10.7 | 6.4 |
| 12.7 | 21.5 | 0 | 7.3 | 11.8 |
| 4.3 | 32.4 | 0 | 4.1 | 9.2 |
| 4.3 | 17.4 | 11.8 | 3.3 | 7.6 |
| 0 | 17.8 | 13.1 | 0.4 | 7.0 |
| 0 | 5.1 | 10.6 | <0.1 | 7.3 |
| 0 | 0 | 12.5 | <0.1 | 8.6 |

## Table 3

## Effect of Temperature on Culture Performance

| Component | Concentration in, mgl⁻¹ | | | | |
|---|---|---|---|---|---|
| | Feed | Effluent at Reactor Temperatures (°C) of | | | |
| | | 22 | 40 | 45 | 50 |
| Ethanol | 186 | <1 | <1 | 131 | 167 |
| Acetate | 0 | 20 | 22 | 60 | 0 |
| Sulphate | 1465 | 1102 | 1156 | 1438 | 1474 |
| Zinc | 102.4 | <0.004 | <0.004 | 1.81 | 2.21 |
| Cadmium | 3.22 | 0.009 | 0.017 | 0.018 | 0.143 |
| Cobalt | 1.58 | 0.064 | 0.080 | 1.204 | 0.683 |
| Copper | 3.11 | <0.004 | 0.007 | <0.004 | 0.025 |
| Magnesium | 28.6 | 28.5 | 26.3 | 26.6 | 29.0 |
| Calcium | 306 | 263 | 258 | 288 | 291 |

## TABLE 4

| | EXAMPLE 1 Feed Medium | EXAMPLE 1 Reactor Effluent | EXAMPLE 2 Feed Medium | EXAMPLE 2 Reactor Effluent | EXAMPLE 3 Feed Medium | EXAMPLE 3 Reactor Effluent | EXAMPLE 4 Feed Medium | EXAMPLE 4 Reactor Effluent | EXAMPLE 5 Feed Medium | EXAMPLE 5 Reactor Effluent |
|---|---|---|---|---|---|---|---|---|---|---|
| Residence time (h) | | 23 | | 4 | | 8 | | 11 | | 5 |
| Temperature (C) | | 31 | | 30 | | 34 | | 21 | | 35 |
| pH | 3.0* | 7.5 | 3.2 | 7.0 | 6.7* | 7.2 | 4.9* | 7.0 | 5.0* | 6.9 |
| Redox # (mV) | ND | <-300 | ND | <-300 | +20 | -360 | +190 | -300 | +180 | -295 |
| Ethanol (ppm) | 208 | <1 | 524 | <1 | 260 | <1 | 1040 | <1 | 580 | <1 |
| Acetate (ppm) | 0 | <1 | 0 | 83 | 0 | <10 | 0 | 50 | 0 | <10 |
| Phosphate (ppm) | 62.3 | 30.9 | 30.8 | 14.0 | 5.6 | 1.6 | NU | 1.9 | ND | BD |
| Ammonium (ppm) | ND | ND | ND | ND | 31 | 22 | 76 | 24 | 23 | 34 |
| Sulphate (ppm) | 1340 | 985 | 1480 | 312 | 805 | 335 | 3200 | 1340 | 1720 | 480 |
| Zinc (ppm) | 118 | 0.032 | 112 | <0.004 | 107 | 0.17 | 1070 | 0.22 | 367 | <0.05 |
| Cadmium (ppm) | 3.70 | <0.005 | 3.47 | <0.006 | 0.87 | <0.01 | 18.0 | <0.01 | 6.4 | <0.001 |
| Copper (ppm) | 3.61 | <0.004 | 2.98 | 0.009 | 0.46 | <0.02 | 6.8 | <0.02 | 2.26 | <0.01 |
| Cobalt (ppm) | 2.53 | 0.007 | 2.05 | 0.019 | 0.14 | <0.02 | 0.51 | <0.02 | 0.26 | <0.01 |
| Nickel (ppm) | 1.77 | 0.029 | 1.46 | 0.029 | 0.08 | <0.02 | 0.46 | <0.02 | 0.24 | 0.012 |
| Iron (ppm) | 10.2 | 0.011 | 6.08 | 0.062 | 49 | 0.03 | 67 | 0.10 | 60 | 0.05 |
| Manganese (ppm) | 6.58 | 1.18 | 6.12 | 0.57 | 8.8 | 2.0 | 68 | 21 | 29 | 8.6 |
| Chromium (ppm) | 2.21 | 0.059 | 1.34 | 0.056 | ND | ND | ND | ND | ND | ND |
| Molybdenum (ppm) | 3.98 | 1.84 | 4.30 | 0.91 | ND | ND | ND | ND | ND | ND |
| Calcium (ppm) | 283 | 237 | 315 | 237 | 360 | 365 | 370 | 392 | 348 | 330 |
| Magnesium (ppm) | 27.7 | 26.6 | 27.5 | 27.3 | 17.4 | 18.5 | 140 | 116 | 56 | 48 |

(ppm) = mg.l⁻¹ in solution    * before reactor control    # verses Standard Calomel    ND = Not Determined

## Claims

1. A process for treating sulphate-containing aqueous waste streams, which comprises anaerobic microbial reduction of the sulphate using sulphate reducing bacteria, while adding to the reaction mixture an alcohol as carbon/energy source.

2. A process according to claim 1, which additionally comprises anaerobic microbial methanogenesis.

3. A process according to claim 2, which is conducted at a redox potential below - 250 mV with respect to a standard calomel electrode, preferably below -300 mV.

4. A process according to any preceding claim, which is conducted at a pH of 6 to 8.5.

5. A process according to any preceding claim, which is conducted at 10 to 70°C, preferably at 15-45°C.

6. A process according to any preceding claim, which additionally comprises removing metals in the aqueous waste stream as insoluble metal sulphides, preferably removing zinc.

7. A process according to any preceding claim, which is conducted by passing waste liquid through an airtight sludge reactor in which the anaerobic microbial action takes place.

8. A process according to any preceding claim, which is conducted in the presence of a flocculant, to enhance the density of the sludge bed.

9. A process according to any preceding claim, wherein the alcohol is methanol or ethanol, preferably ethanol.

# Figure 1

## Mass Balance, over SRB Reactor, for Aquifer Treatment (kg)

GASEOUS EFFLUENT

| | |
|---|---|
| Hydrogen Sulphide | 9.4 |
| Carbon Dioxide | 0.4 |
| Methane (max) | 13.2 |

FEED for 250m$^3$

| | |
|---|---|
| Ethanol | 113.2 |
| Sulphate | 305.0 |
| Zinc | 25.0 |
| Cadmium | 0.15 |
| Cobalt | 0.025 |
| Copper | 0.075 |
| Calcium | 90.0 |
| Magnesium | 4.0 |
| | |
| pH | 4.5 |

BIOREACTOR

pH = 7

AQUEOUS EFFLUENT

| | |
|---|---|
| Carbonate | 173.9 |
| Sulphate | 50.0 |
| Sulphide | 63.9 |
| Zinc | <0.004 |
| Cadmium | <0.004 |
| Cobalt | <0.004 |
| Copper | <0.004 |
| Calcium | 75.0 |
| Magnesium | 4.0 |
| | |
| pH | 7.5 |

SLUDGE

| | |
|---|---|
| Biomass ($CH_2O$) | 24.5 |
| Carbonate | 22.5 |
| Sulphide | 12.4 |
| Zinc | 25.0 |
| Cadmium | 0.15 |
| Cobalt | 0.025 |
| Copper | 0.075 |
| Calcium | 15.0 |

EP 0 436 254 A1

Figure 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WATER RESEARCH. vol. 19, no. 09, September 1985, OXFORD GB pages 1101 - 1106; J.P.Maree et al.: "Biological sulfate removal in an upflow packed bed reactor" * page 1101 * "Materials and methods" * * pages 1102 - 1104 * "Results and discussion" "Removal of heavy metals" @ page 1105 * "Conclusions" * | 1,3-5,7,9 | C 02 F 3/28 C 02 F 1/62 |
| Y | PATENT ABSTRACTS OF JAPAN vol. 6, no. 98 (C-106)(976) 08 June 1982, & JP-A-57 27198 (KURITA KOGYO) 13 February 1982, * the whole document * | 1,3-5,7,9 | |
| A | NL-A-8 602 190 (VERENIGING VAN NEDERLANDSE FABRIKANTEN VAN EETBARE OLIEN EN VETTEN) * page 10; claims 1, 2 * | 1,2,4,5,7 | |
| A | EP-A-0 135 486 (SCA DEVELOPMENT AKTIEBOLAG) * page 9; claim 1 * | 1-3 | |
| A | BIOTECHNOLOGY AND BIOENGINEERING. vol. 28, no. 11, November 1986, NEW YORK US pages 1601 - 1607; J.P.Barford et al.: "Anaerobic digestion of high-strength cheese whey utilizing semicontinuousdigesters and chemical flocculant addition" * page 1607 * "Conclusions" point 1 and last par agraph * | 1,8 | TECHNICAL FIELDS SEARCHED (Int. Cl.5) C 02 F |
| A | GWF AUSGABE WASSER. vol. 125, no. 9, September 1984, MUNCHEN DE pages 424 - 426; F.Plahl-Wabnegg et al.: "Biologische Schwermetallentfernung bei Industrieabwässern" * page 424 * "Einleitung" * * page 425 * "Mikrobiologische Aspekte" "Versuchsmethodik", "Ergebnisse", "Schlussfolger ungen" * | 1,2,4-6,7 | |

−/−

The present search report has been drawn up for all claims

| Place of search | Date of completion of search | Examiner |
|---|---|---|
| The Hague | 20 March 91 | TEPLY J. |

**European Patent Office**

# EUROPEAN SEARCH REPORT

Application Number

**EP 90 20 3480**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | JOURNAL OF THE WATER POLLUTION CONTROL FEDERATION. vol. 59, no. 12, December 1987, WASHINGTON US pages 1069 - 1074; J.P.Maree et al.: "An integrated process for biological treatment of sulfate-containing industrial effluents" <br> * page 1074 * "Conclusions" * <br> — — — — — | 1 | |
| | | | TECHNICAL FIELDS SEARCHED (Int. Cl.5) |

The present search report has been drawn up for all claims

| Place of search | Date of completion of search | Examiner |
|---|---|---|
| The Hague | 20 March 91 | TEPLY J. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document